# EUROPÄISCHE PATENTSCHRIFT

(11) **EP 3 069 034 B1**
(45) Veröffentlichungstag und Bekanntmachung des Hinweises auf die Patenterteilung: **13.12.2017**
(21) Anmeldenummer: 14798688.9
(22) Anmeldetag: 20.10.2014
(51) Int. Cl.: F16D 13/52, F16D 23/12, H02K 7/108, H02K 49/04

(54) **RAMPENSYSTEM ZUM BETÄTIGEN EINER REIBUNGSKUPPLUNG**
RAMP SYSTEM FOR ACTUATING A FRICTIONAL CLUTCH
SYSTÈME EN RAMPE PERMETTANT L'ACTIONNEMENT D'UN EMBRAYAGE À FRICTION

(30) Priorität: 13.11.2013 DE 102013223044; 28.03.2014 DE 102014205850
(43) Veröffentlichungstag der Anmeldung: 21.09.2016
(73) Patentinhaber: Schaeffler Technologies AG & Co. KG, 91074 Herzogenaurach (DE)
(72) Erfinder: FINKENZELLER, Marc, 77723 Gengenbach (DE); HELMER, Daniel, 77883 Ottenhöfen (DE)
(86) Internationale Anmeldenummer: PCT/DE2014/200567
(87) Internationale Veröffentlichungsnummer: WO 2015/070852

(56) Entgegenhaltungen:
- WO-A1-2011/050773
- WO-A1-2013/186101
- DE-A1-102014 206 985
- US-A1- 2005 167 229

## Beschreibung

Die Erfindung betrifft ein Rampensystem zum Betätigen einer Reibungskupplung, insbesondere nasse oder trockene Lamellenkupplung, mit dessen Hilfe durch eine Änderung der axialen Erstreckung des Rampensystems die Reibungskupplung geöffnet und/oder geschlossen werden kann, um eine Antriebswelle eines Kraftfahrzeugmotors mit mindestens einer Getriebeeingangswelle eines Kraftfahrzeuggetriebes zu kuppeln, gemäß dem Oberbegriff des Anspruchs 1.
Aus DE 10 2010 048 827 A1 ist eine nasse Lamellenkupplung zum Kuppeln einer Antriebswelle eines Kraftfahrzeugmotors mit einer Getriebeeingangswelle eines Kraftfahrzeuggetriebes bekannt, bei der eine Vorkupplung mit einem Rampenmechanismus vorgesehen ist, um eine erhöhte Anpresskraft im geschlossenen Zustand der Reibungskupplung zu erreichen. Weiterhin ist aus der US 2005/167229 A1 ein Rampensystem gemäß dem Oberbegriff des Anspruchs 1 bekannt. Es besteht ein ständiges Bedürfnis mit geringem konstruktivem Aufwand eine Reibungskupplung sicher schließen zu können.
Es ist die Aufgabe der Erfindung Maßnahmen aufzuzeigen, die ein sicheres Schließen einer Reibungskupplung mit geringem konstruktivem Aufwand ermöglichen.
Die Lösung der Aufgabe erfolgt erfindungsgemäß durch ein Rampensystem mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.
Ein Rampensystem zum Betätigen einer Reibungskupplung, insbesondere nasse oder trockene Lamellenkupplung, zum Kuppeln einer Antriebswelle eines Kraftfahrzeugmotors mit mindestens einer Getriebeeingangswelle, ist vorgesehen mit einer Eingangsrampe zum Einleiten eines Betätigungsmoments, einer relativ zur Eingangsrampe verdrehbaren Ausgangsrampe zum Öffnen und/oder Schließen der Reibungskupplung und einer mit der Eingangsrampe und der Ausgangsrampe verbundenen als Blattfeder ausgestalteten Rückstellfeder zum Verdrehen der Ausgangsrampe relativ zur Eingangsrampe in eine definierte Ausgangslage, wobei zumindest ein Teil des an die Ausgangsrampe übertragenen Drehmoments über die Rückstellfeder übertragbar ist, wobei die Rückstellfeder zwischen einer Drehmomenteinleitungsstelle der Eingangsrampe und einer Drehmomentausleitungsstelle der Ausgangsrampe im Wesentlichen in tangentialer Richtung verläuft und um einen Anstellwinkel zu einer Radialebene des Rampensystems schräg verläuft, wobei die Rückstellfeder bei einer Erhöhung der axialen Erstreckung des Rampensystems eine Erhöhung der Betätigungskraft an der Ausgangsrampe zulässt.

Die als Blattfeder ausgestaltete Rückstellfeder wird nicht nur zum Anfahren einer definierten Relativlage der Eingangsrampe zur Ausgangsrampe in der Ausgangslage sondern auch zum Übertragen zumindest eines Teils des in die Reibungskupplung eingeleiteten Betätigungsmoments verwendet. Hierbei wird die Erkenntnis ausgenutzt, dass sich über den Verschleißbereich von Reibbelägen der Reibungskupplung der axiale Verlagerungsweg einer von der Eingangsrampe weg weisenden Anpressfläche der Ausgangsrampe relativ zur Eingangsrampe vergrößert und sich dadurch der Anstellwinkel der Rückstellfeder zur Radialebene verändert. Der axiale Hubweg der Anpressfläche entspricht der Änderung der axialen Erstreckung des Rampensystems. Durch den sich vergrößernden oder verkleinernden Anstellwinkel ändern sich in der Art eines schräg betätigten Kniehebels die Kraftverhältnisse an der Rückstellfeder, so dass sich der in Längsrichtung der Rückstellfeder verlaufende Kraftanteil verändert. Entsprechend ändert sich an dem in Kraftflussrichtung ausgangsseitigen Ende der Rückstellfeder der in axialer Richtung des Rampensystems weisende Kraftanteil, so dass sich in Abhängigkeit des Hubwegs der Anpressfläche, der mit dem Verschleißzustand der Reibbeläge korrespondiert, von der Rückstellfeder eine entsprechende sich erhöhende Axialkraft aufgeprägt werden kann, um im geschlossenen Zustand der Reibungskupplung eine sich verschleißbedingt erhöhende Rückstellkraft der Rückstellfeder zumindest teilweise zu kompensieren. Dadurch kann über den Verschleißbereich der Reibbeläge die Anpresskraft des Rampensystems und/oder die erforderliche Betätigungskraft zum Betätigen der Reibungskupplung innerhalb einer vergleichsweise engen Bandbreite bleiben und insbesondere im Wesentlichen konstant sein.

Das Rampensystem kann dadurch insbesondere für eine Reibungskupplung verwendet werden, mit deren Hilfe ein Verbrennungsmotor an den Antriebsstrang eines Hybrid-Fahrzeugs angekuppelt werden kann. Bei einer derartigen auch als "E-Clutch" bezeichneten Reibungskupplung kann es sich um eine rotorintegrierte Kupplung handeln, welche den Verbrennungsmotor mit einer elektrischen Maschine sowie dem Antriebstrang verbindet. Die E-Clutch kann hierbei mit dem Rotor der elektrischen Maschine mitrotieren und/oder den Verbrennungsmotor mit dem Rotor der elektrischen Maschine kuppeln. Zum Starten des Verbrennungsmotors kann die elektrische Maschine eingesetzt werden. Wird bereits elektrisch gefahren, so kann die elektrische Maschine zum Zeitpunkt des Motorstarts des Verbrennungsmotors das aktuell bereitgestellte Moment um das Startmoment des Verbrennungsmotors erhöhen, wobei gleichzeitig die E-Clutch geschlossen werden kann. Dadurch kann ein Drehmomentfluss von der elektrischen Maschine zum Verbrennungsmotor erfolgen, um den Verbrennungsmotor zu starten. Hierbei kann insbesondere das übertragbare Moment der E-Clutch sehr genau auf das Startmoment eingestellt werden, damit am Kraftfahrzeug keine Längsbeschleunigung auftritt. Durch die Kompensierung der sich erhöhenden Rückstellkraft der Rückstellfeder bei verschlissenen Reibbelägen durch eine sich ändernde Kraftübersetzung der Rückstellfeder kann das von der E-Clutch zu übertragende Drehmoment im Wesentlichen unabhängig vom Verschleiß der Reibbeläge sein, so dass ein sehr komfortables und im Wesentlichen unmerkliches Zuschalten und/oder Abschalten des Verbrennungsmotors an beziehungsweise von dem Antriebsstrang erfolgen kann. Durch die Verwendung der schräg zur Radialebene tangential verlaufenden Rückstellfeder auch zur Drehmomentübertragung kann eine im Verschleiß der Reibbeläge nachlassende Anpresskraft durch eine Änderung der Kraftrichtung des über die Rückstellfeder eingeleiteten Drehmoments zumindest kompensiert werden, so dass ein sicheres Schließen einer Reibungskupplung mit geringem konstruktivem Aufwand ermöglicht ist, wobei insbesondere gleichzeitig ein besonders komfortables Ankuppeln eines Verbrennungsmotors an einen Antriebsstrang eines Hybrid-Kraftfahrzeugs ermöglicht ist.

Je nach konstruktivem Aufbau des Rampensystems kann die Rückstellfeder auf Druck oder auf Zug belastet werden. Wenn die Rückstellfeder zur Drehmomentübertragung auf Druck belastet wird, kann die als Blattfeder ausgestaltete Rückstellfeder bis zu einer unterhalb einer Knickkraft liegenden und in Längsrichtung der Blattfeder verlaufenden Kraft auf Biegung beansprucht werden. Insbesondere sind mehrere Rückstellfedern vorgesehen, die insbesondere in Umfangsrichtung vorzugsweise auf einem gemeinsamen Nennradius gleichmäßig verteilt sind, so dass sich die an der einzelnen Rückstellfeder angreifenden Kräfte reduzieren können. Die Rückstellfeder verläuft insbesondere im Wesentlichen tangential und kann durch ihren Anstellwinkel relativ zur Radialebene eine axiale Strecke überbrücken. Es ist auch möglich, dass die Rückstellfeder mit einem Anteil in radialer Richtung verläuft, wobei insbesondere der Anteil der Längserstreckung der Rückstellfeder in tangentialer Richtung deutlich größer als in radialer Richtung ist. Die Rückstellfeder weist insbesondere mehrere übereinander angeordnete Federlagen auf, die insbesondere jeweils aus einem Stahlblech hergestellt sind. Mehrere Federlagen können beispielsweise miteinander vernietet sein. Insbesondere ist die Rückstellfeder, beispielsweise durch in den Federlagen eingeprägte Sicken, versteift und entsprechend knickfest ausgestaltet. Zum Betätigung des Rampensystems kann die vorzugsweise in axialer Richtung feststehende Eingangsrampe relativ zur insbesondere in Umfangsrichtung drehfesten Ausgangsrampe verdreht werden. Hierzu kann mit Hilfe eines Vorsteuerelements ein entsprechendes Drehmoment in das Rampensystem eingeleitet werden. Beispielsweise kann mit Hilfe einer Wirbelstrombremse ein von einer elektrischen Maschine eines Hybrid-Fahrzeugs erzeugtes Drehmoment eingeleitet werden. Das eingeleitete Drehmoment kann unmittelbar auf die Eingangsrampe einwirken oder mittelbar, insbesondere nach einer Drehmomentwandlung, beispielsweise mit Hilfe eines Planetengetriebes, an die Eingangsrampe übertragen werden. Das Rampensystem kann als Betätigungselement zum Schließen und/oder Öffnen der Reibungskupplung ausgestaltet sein, wobei insbesondere die von der Eingangsrampe weg weisenden Anpressfläche der Ausgangsrampe an einem Reibbelag der Reibungskupplung angreifen kann. Die Ausgangsrampe kann dadurch bereits eine Anpressplatte und/oder Stahllamelle der Reibungskupplung ausbilden. Die Reibungskupplung ist insbesondere als nasse oder trockene Lamellenkupplung mit mehreren hintereinander vorgesehenen Reibpaarungen zwischen dem Eingangsteil und dem Ausgangsteil ausgestaltet. Vorzugsweise kann mit Hilfe eines Kühlmittels, insbesondere Öl, Reibungswärme aus der Reibungskupplung abgeführt werden, so dass die Reibungskupplung insbesondere als nasse Lamellenkupplung ausgestaltet sein kann. Das Eingangsteil und/oder das Ausgangsteil können einen Lamellenträger aufweisen, an dem in axialer Richtung verschiebbare Lamellen geführt sind. Die jeweilige Lamelle kann mit Reibbelägen versehen sein oder als Stahllamelle ausgeführt sein. Die Reibungskupplung kann in der Ausgangslage, wenn über das Betätigungselement keine Betätigungskraft eingeleitet wird, geöffnet ("normally open) oder geschlossen ("normally closed") sein.

Insbesondere stellt die Rückstellfeder bei der Drehmomentübertragung durch den tangentialen Verlauf der Rückstellfeder eine sich bei einer Erhöhung der axialen Erstreckung des Rampensystems verändernde Kraftübersetzung in axialer Richtung bereit, wobei die Kraftübersetzung eine Änderung einer sich bei einer Erhöhung der axialen Erstreckung des Rampensystems verändernde Rückstellkraft der Rückstellfeder in axialer Richtung in die Ausgangslage im Wesentlichen ausgleicht. Dadurch ergibt sich zumindest ein Teilbereich zwischen einer der vollständig geöffneten Stellung der Reibungskupplung entsprechenden Relativlage der Eingangsrampe zur Ausgangsrampe und einer der bei verschlissenen Reibbelägen vollständig geschlossenen Stellung der Reibungskupplung entsprechenden Relativlage der Eingangsrampe zur Ausgangsrampe, in welcher die von der Ausgangsrampe über die Anpressfläche aufgebrachte Anpresskraft im Wesentlichen konstant sein kann. Zusätzlich oder alternativ kann in diesem Bereich der Verlauf der erforderlichen Betätigungskraft zur Änderung der axialen Erstreckung des Rampensystems im Wesentlichen konstant und/oder im Wesentlichen unabhängig vom Verschleißzustand der Reibbeläge der Reibungskupplung sein. Dies ermöglicht eine besonders genaue Ansteuerung der Reibungskupplung über das Rampensystem über im Wesentlichen die gesamte Lebensdauer der Reibungskupplung. Insbesondere kann eine Neujustierung des Rampensystems nach einem Austausch von Reibbelägen eingespart werden.

Vorzugsweise ist eine Erstreckung der Rückstellfeder in Umfangsrichtung und/oder der Anstellwinkel der Rückstellfeder und/oder eine Federsteifigkeit der Rückstellfeder und/oder ein axialer Abstand zwischen der Drehmomenteinleitungsstelle und der Drehmomentausleitungsstelle und/oder ein Reibwert einer von der Eingangsrampe weg weisenden Anpressfläche der Ausgangsrampe zum Ausgleichen einer sich erhöhenden Ruckstellkraft der Rückstellfeder bei einer sich erhöhenden Erstreckung des Rampensystems gewählt. Durch diese Parameter kann ein geeigneter Verlauf der Kraftübersetzung der Rückstellfeder sowie der Rückstellkraft der Rückstellfeder eingestellt werden.

Besonders bevorzugt ist die Eingangsrampe zu der Ausgangsrampe über mindestens ein Lagerelement, insbesondere eine Kugel, beabstandet. Das Rampensystem kann dadurch als Kugelrampensystem mit einer geringen inneren Reibung ausgestaltet sein. Durch das Lagerelement kann insbesondere die Ausgangsrampe soweit zu der Eingangsrampe beabstandet sein, dass die Rückstellfeder leicht in axialer Richtung zwischen der Eingangsrampe und der Ausgangsrampe positioniert werden kann. Dadurch kann die Rückstellfeder leicht mit der Eingangsrampe und der Ausgangsrampe verbunden werden ohne den Bauraumbedarf signifikant zu erhöhen. Ferner ist es nicht erforderlich die Rückstellfeder in dafür vorgesehene Vertiefungen in der Eingangsrampe und/oder der Ausgangsrampe versenkt aufzunehmen.

Die Eingangsrampe weist ein Lagerteil zur Abstützung des Rampensystems an einem Lager auf, wobei die Rückstellfeder zur Ausbildung der Drehmomenteinleitungsstelle mit dem Lagerteil verbunden ist. Eine direkte Verbindung mit einer Fläche der Eingangsrampe, die auch die Rampe der Eingangsrampe ausbildet, ist dadurch nicht erforderlich. Dadurch kann ein entsprechend größerer Teil der Eingangsrampe zu Abstützung der Ausgangsrampe genutzt werden. Da für die Rückstellfeder insbesondere in einem entsprechend größeren Radiusbereich die Drehmomenteinleitungsstelle vorgesehen werden kann, werden zusätzlich konstruktive Freiheiten geschaffen.

Vorzugsweise ist das Lagerteil ein Planetenträger eines Planetengetriebes zum Übertragen eines Betätigungsmoments an die Eingangsrampe. Durch das Planetengetriebe kann eine Drehmomentwandlung erfolgen, so dass beispielsweise ein kleineres Drehmoment in ein grö-ßeres an der Eingangsrampe angreifendes Drehmoment gewandelt werden kann. Da die Rampe der Eingangsrampe drehfest mit dem Planetenträger des Planetengetriebes verbunden sein kann, kann auch die Rückstellfeder leicht mit dem Planetenträger verbunden werden.

Die Erfindung betrifft ferner eine Reibungskupplung, insbesondere nasse oder trockene Lamellenkupplung, zum Kuppeln einer Antriebswelle eines Kraftfahrzeugmotors mit mindestens einer Getriebeeingangswelle, mit einem mit der Antriebswelle koppelbaren Eingangsteil, insbesondere Eingangslamellenträger, zum Einleiten eines Drehmoments, einem mit der Getriebeeingangswelle koppelbaren Ausgangsteil, insbesondere Ausgangslamellenträger, zum Ausleiten eines Drehmoments, wobei das Eingangsteil mit dem Ausgangsteil über mindestens einen verschleißbehafteten Reibbelag verpressbar ist, und einem Rampensystem, das wie vorstehend beschrieben aus- und weitergebildet sein kann, zum reibschlüssigen Verpressen des Ausgangsteils mit dem Eingangsteil durch eine Änderung der axialen Erstreckung des Rampensystems. Durch die Verwendung der schräg zur Radialebene tangential verlaufenden Rückstellfeder auch zur Drehmomentübertragung in dem Rampensystem kann eine im Verschleiß der Reibbeläge nachlassende Anpresskraft durch eine Änderung der Kraftrichtung des über die Rückstellfeder eingeleiteten Drehmoments zumindest kompensiert werden, so dass ein sicheres Schließen einer Reibungskupplung mit geringem konstruktivem Aufwand ermöglicht ist, wobei insbesondere gleichzeitig ein besonders komfortables Ankuppeln eines Verbrennungsmotors an einen Antriebsstrang eines Hybrid-Kraftfahrzeugs ermöglicht ist.

Insbesondere ist die Rückstellkraft der Rückstellfeder zwischen der geschlossenen Stellung der Reibungskupplung bei unverschlissenem Reibbelag und der geschlossenen Stellung der Reibungskupplung bei verschlissenem Reibbelag im Wesentlichen konstant. Dadurch ergibt sich zumindest ein Teilbereich zwischen einer der bei unverschlissenen Reibbelägen geschlossenen Stellung der Reibungskupplung entsprechenden Relativlage der Eingangsrampe zur Ausgangsrampe und einer der bei verschlissenen Reibbelägen geschlossenen Stellung der Reibungskupplung entsprechenden Relativlage der Eingangsrampe zur Ausgangsrampe, in welcher die von der Ausgangsrampe über die Anpressfläche aufgebrachte Anpresskraft im Wesentlichen konstant sein kann. Zusätzlich oder alternativ kann in diesem Bereich der Verlauf der erforderlichen Betätigungskraft zum Änderung der axialen Erstreckung des Rampensystems im Wesentlichen konstant und/oder im Wesentlichen unabhängig vom Verschleißzustand der Reibbeläge der Reibungskupplung sein. Dies ermöglicht eine besonders genaue Ansteuerung der Reibungskupplung über das Rampensystem über im Wesentlichen die gesamte Lebensdauer der Reibungskupplung. Insbesondere kann eine Neujustierung des Rampensystems nach einem Austausch von Reibbelägen eingespart werden.

Vorzugsweise stellt die Rückstellfeder bei unverschlissenem Reibbelag in der geschlossenen Stellung der Reibungskupplung eine Nennrückstellkraft und die Rückstellfeder bei der Drehmomentübertragung durch den tangentialen Verlauf der Rückstellfeder eine sich bei einer verschleißbedingeten Erhöhung der axialen Erstreckung des Rampensystems durch einen Verschleiß des Reibbelags verändernde Kraftübersetzung in axialer Richtung bereit, wobei die Kraftübersetzung eine Änderung einer sich bei einer verschleißbedingten Erhöhung der axialen Erstreckung des Rampensystems verändernde Nennrückstellkraft im Wesentlichen ausgleicht. Dadurch kann die Nennrückstellkraft im Wesentlichen unabhängig vom Verschleißzustand der Reibbeläge sein. Insbesondere kann die in das Rampensystem und die Reibungskupplung eingeleitete Betätigungskraft für die Nennrückstellkraft ausgelegt sein, ohne dass zusätzliche signifikante unnötige Sicherheitszuschläge vorgesehen werden brauchen. Eine unnötige Überdimensionierung der Betätigungskraft kann dadurch vermieden werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines Kupplungsaggregats und
- Fig. 2:: eine schematische Schnittansicht eines Rampensystems für das Kupplungsaggregat aus Fig. 1.

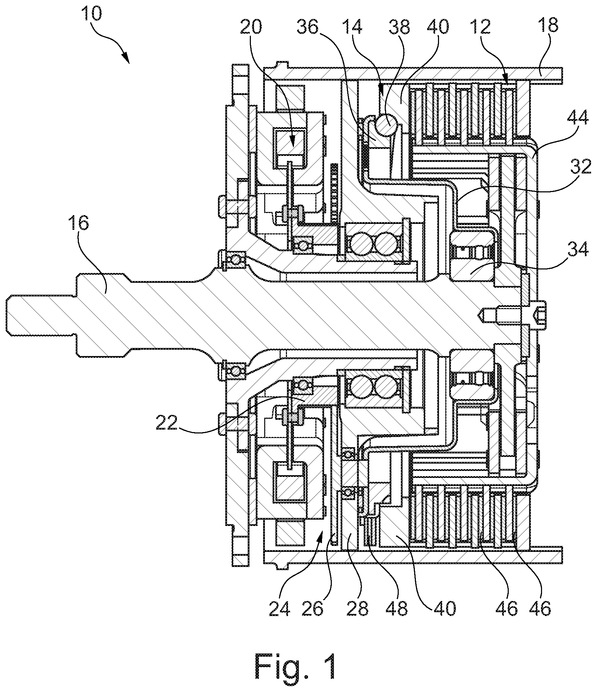

Das in Fig. 1 dargestellte Kupplungsaggregat 10 weist eine als trockene Lamellenkupplung ausgestaltete Reibungskupplung 12 auf, die mit Hilfe eines Rampensystems 14 geöffnet und/oder geschlossen werden kann, um einen Drehmomentfluss zwischen einer Antriebswelle 16 eines als Verbrennungsmotor ausgestalteten Kraftfahrzeugmotors und einer über ein Ausgangsteil 18 der Reibungskupplung 12 anschließbaren Getriebeeingangswelle eines Kraftfahrzeuggetriebes zu trennen beziehungsweise herzustellen. Das Ausgangsteil 18 kann gleichzeitig Teil eines Rotors einer elektrischen Maschine zum Antrieb eines Kraftfahrzeugs sein. Dies ermöglicht es insbesondere mit Hilfe einer Wirbelstrombremse 20 ein Teil des von der elektrischen Maschine über das Ausgangsteil 18 bereitgestellten Drehmoments abzuzweigen. Die Wirbelstrombremse 20 ist mit einem Sonnenrad 22 eines Planetengetriebes 24 drehfest verbunden. Das Planetengetriebe 24 weist mehrere, insbesondere drei, mit dem Sonnenrad 22 kämmende Planetenräder 26 auf, die an einem Planetenträger 28 gelagert sind. Dadurch kann das über die Wirbelstrombremse 20 entnommene Drehmoment geeignet gewandelt werden.

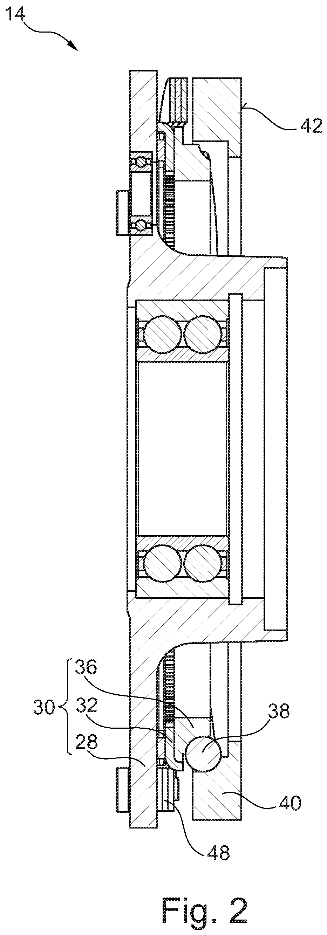

Wie in Fig. 2 dargestellt kann der Planetenträger 28 Teil einer mehrteiligen Eingangsrampe 30 des Rampensystems 14 sein. Die Eingangsrampe 30 weist ferner ein Lagerteil 32 auf, über das die Eingangsrampe 30 und das Rampensystem 14 an einem an der Antriebswelle 16 abgestützten Lager 34 gelagert und abgestützt ist. Zur Ausbildung der Eingangsrampe 30 ist der Planetenträger 28 über das Lagerteil 32 mit einem Rampenelement 36 drehfest verbunden. Die Gesamtheit der Eingangsrampe 30 ist in Umfangsrichtung drehbar und in axialer Richtung unbeweglich gelagert. An dem Rampenelement 36 der Eingangsrampe 30 ist über als Kugel ausgestaltete Lagerelemente 38 eine Ausgangsrampe 40 abgestützt, die insbesondere drehfest mit dem Ausgangsteil 18 gekoppelt ist und in axialer Richtung bewegbar ist. Bei einer Relativdrehung der Eingangsrampe 30 zur Ausgangsrampe 40 ändert sich die Erstreckung des Rampensystems 14 in axialer Richtung, so dass eine von der Eingangsrampe 30 weg weisende Anpressfläche 42 der Ausgangsrampe 40 axial verlagert werden kann, um die Reibungskupplung 12 zu öffnen beziehungsweise zu schließen.

Im geschlossenen Zustand der Reibungskupplung 12 kann ein Eingangsteil 44 der Reibungskupplung über verschleißbehaftete Reibbeläge 46 mit dem Ausgangsteil 18 reibschlüssig verpresst werden. Das Eingangsteil 44 ist drehfest mit der Antriebswelle 16 verbunden, so dass im geschlossenen Zustand der Reibungskupplung 12 der Kraftfahrzeugmotor mit dem Ausgangsteil 18 gekoppelt ist, um ein Startmoment zum Starten des Kraftfahrzeugmotors über die Antriebswelle 16 in den Kraftfahrzeugmotor einzuleiten oder ein von dem Kraftfahrzeugmotor erzeugtes Drehmoment über die Antriebswelle 16 an das Ausgangsteil 18 zu übertragen. Das Ausgangsteil 18 kann insbesondere über eine Trennkupplung mit mindestens einer Getriebeeingangswelle eines Kraftfahrzeuggetriebes gekuppelt werden.

Wenn über die Wirbelstrombremse 20 kein Drehmoment in das Rampensystem 14 eingeleitet wird, kann von der Anpressfläche 42 der Ausgangsrampe 40 keine Anpresskraft mehr in die Reibungskupplung 12 eingeleitet werden. Mit Hilfe einer als Blattfeder ausgestalteten Rückstellfeder 48 kann das Rampensystem 14 in eine Relativlage zurückgedreht werden, die einer geöffneten Stellung der Reibungskupplung 12 einspricht. Im dargestellten Ausführungsbeispiel ist die Rückstellfeder 48 radial außerhalb zum Rampenelement 36 der Eingangsrampe 30 an aufeinander zu weisenden Seiten des Planetenträgers 36 und der Ausgangsrampe 40 befestigt. Die Rückstellfeder 48 kann dadurch zwischen einer durch die Verbindungsstelle mit dem Planetenträger 36 ausgebildeten Drehmomenteinleitungsstelle der Eingangsrampe 30 und einer durch die Verbindungsstelle mit der Ausgangsrampe 40 ausgebildeten Drehmomentausleitungsstelle der Ausgangsrampe 40 im Wesentlichen in tangentialer Richtung verlaufen und dadurch ein Teil des über den Planetenträger 36 eingeleiteten Drehmoments übertragen. Die Rückstellfeder 48 verläuft um einen Anstellwinkel zu einer Radialebene des Rampensystems 14 schräg, wobei sich der erreichbare Anstellwinkel in der geschlossenen Stellung der Reibungskupplung 12 in Abhängigkeit vom Verschleißzustand der Reibbeläge 46 und einem damit verbundenen erhöhten Verlagerungsweg der Anpressfläche 42 ändert. Dadurch ändert sich die Kraftübersetzung der Rückstellfeder 48, so dass eine sich verschleißbedingt erhöhende Rückstellkraft der Rückstellfeder 48 in der geschlossenen Stellung der Reibungskupplung 12 ausgeglichen werden kann.

### Bezugszeichenliste

- 10: Kupplungsaggregat
- 12: Reibungskupplung
- 14: Rampensystem
- 16: Antriebswelle
- 18: Ausgangsteil
- 20: Wirbelstrombremse
- 22: Sonnenrad
- 24: Planetengetriebes
- 26: Planetenrad
- 28: Planetenträger
- 30: Eingangsrampe
- 32: Lagerteil
- 34: Lager
- 36: Rampenelement
- 38: Lagerelemente
- 40: Ausgangsrampe
- 42: Anpressfläche
- 44: Eingangsteil
- 46: Reibbelag
- 48: Rückstellfeder

## Patentansprüche

1. Rampensystem zum Betätigen einer Reibungskupplung (12), insbesondere nasse oder trockene Lamellenkupplung, zum Kuppeln einer Antriebswelle (16) eines Kraftfahrzeugmotors mit mindestens einer Getriebeeingangswelle, wobei das Rampensystem aufweist:
eine Eingangsrampe (30) zum Einleiten eines Betätigungsmoments,
eine relativ zu der Eingangsrampe (30) verdrehbare Ausgangsrampe (40) zum Öffnen oder Schließen der Reibungskupplung (12) und
eine mit der Eingangsrampe (30) und der Ausgangsrampe (40) verbundene als Blattfeder ausgestaltete Rückstellfeder (48) zum Verdrehen der Ausgangsrampe (40) relativ zu der Eingangsrampe (30) in eine definierte Ausgangslage, wobei zumindest ein Teil des an die Ausgangsrampe (40) übertragenen Drehmoments über die Rückstellfeder (48) übertragbar ist,
die Rückstellfeder (48) zwischen einer Drehmomenteinleitungsstelle der Eingangsrampe (30) und einer Drehmomentausleitungsstelle der Ausgangsrampe (40) im Wesentlichen in tangentialer Richtung verläuft und um einen Anstellwinkel zu einer Radialebene des Rampensystems (14) schräg verläuft, und
die Rückstellfeder (48) bei einem Erhöhen einer axialen Erstreckung des Rampensystems (14) ein Erhöhen der Betätigungskraft an der Ausgangsrampe (40) zulässt,
**dadurch gekennzeichnet, dass**
die Eingangsrampe (30) ein Lagerteil (32) zum Abstützen des Rampensystems (14) an einem Lager (34) aufweist, und
die Rückstellfeder (48) zum Ausbilden der Drehmomenteinleitungsstelle mit dem Lagerteil (32) verbunden ist.

2. Rampensystem nach Anspruch 1, **dadurch gekennzeichnet, dass**
die Rückstellfeder (48) bei der Drehmomentübertragung durch den tangentialen Verlauf der Rückstellfeder (48) eine sich bei einem Erhöhen der axialen Erstreckung des Rampensystems (14) verändernde Kraftübersetzung in axialer Richtung bereitstellt, und
die Kraftübersetzung eine Änderung einer sich bei einem Erhöhen der axialen Erstreckung des Rampensystems (14) verändernden Rückstellkraft der Rückstellfeder (48) in axialer Richtung in die Ausgangslage im Wesentlichen ausgleicht.

3. Rampensystem nach Anspruch 1 oder 2, **dadurch gekennzeichnet, dass** eine Erstreckung der Rückstellfeder (48) in Umfangsrichtung und/oder der Anstellwinkel der Rückstellfeder (48) und/oder eine Federsteifigkeit der Rückstellfeder (48) und/oder ein axialer Abstand zwischen der Drehmomenteinleitungsstelle und der Drehmomentausleitungsstelle und/oder ein Reibwert einer von der Eingangsrampe (30) weg weisenden Anpressfläche (42) der Ausgangsrampe (40) zum Ausgleichen einer sich erhöhenden Ruckstellkraft der Rückstellfeder (48) bei einer sich erhöhenden Erstreckung des Rampensystems (14) gewählt ist.

4. Rampensystem nach einem der Ansprüche 1 bis 3, **dadurch gekennzeichnet, dass** die Eingangsrampe (30) zu der Ausgangsrampe (40) über mindestens ein Lagerelement (38), insbesondere eine Kugel, beabstandet ist.

5. Rampensystem nach Anspruch 1, **dadurch gekennzeichnet, dass** das Lagerteil (32) ein Planetenträger (36) eines Planetengetriebes (24) zum Übertragen eines Betätigungsmoments an die Eingangsrampe (30) ist.

6. Reibungskupplung, insbesondere nasse oder trockene Lamellenkupplung, zum Kuppeln einer Antriebswelle (16) eines Kraftfahrzeugmotors mit mindestens einer Getriebeeingangswelle, wobei die Reibungskupplung aufweist:
ein mit der Antriebswelle (16) koppelbares Eingangsteil (44), insbesondere Eingangslamellenträger, zum Einleiten eines Drehmoments,
ein mit der Getriebeeingangswelle koppelbaren Ausgangsteil (18), insbesondere Ausgangslamellenträger, zum Ausleiten eines Drehmoments, wobei das Eingangsteil (44) mit dem Ausgangsteil (18) über mindestens einen verschleißbehafteten Reibbelag (46) verpressbar ist, und
ein Rampensystem (14) nach einem der Ansprüche 1 bis 5 zum reibschlüssigen Verpressen des Ausgangsteils (18) mit dem Eingangsteil (44) durch Ändern einer axialen Erstreckung des Rampensystems (14).

7. Reibungskupplung nach Anspruch 6, **dadurch gekennzeichnet, dass** die Rückstellkraft der Rückstellfeder (48) zwischen der geschlossenen Stellung der Reibungskupplung (12) bei unverschlissenem Reibbelag (46) und der geschlossenen Stellung der Reibungskupplung (12) bei verschlissenem Reibbelag (46) im Wesentlichen konstant ist.

8. Reibungskupplung nach Anspruch 6 oder 7, **dadurch gekennzeichnet, dass**
die Rückstellfeder (48) bei unverschlissenem Reibbelag (46) in der geschlossenen Stellung der Reibungskupplung (12) eine Nennrückstellkraft und die Rückstellfeder (48) bei der Drehmomentübertragung durch den tangentialen Verlauf der Rückstellfeder (48) eine sich bei einem verschleißbedingten Erhöhen der axialen Erstreckung des Rampensystems (14) durch einen Verschleiß des Reibbelags (46) verändernde Kraftübersetzung in axialer Richtung bereitstellt, und
die Kraftübersetzung eine Änderung einer sich bei einem verschleißbedingten Erhöhen der axialen Erstreckung des Rampensystems (14) verändernde Nennrückstellkraft im Wesentlichen ausgleicht.

## Claims

1. Ramp system for actuating a friction clutch (12), in particular a wet or dry multiple disc clutch, for coupling a drive shaft (16) of a motor vehicle engine to at least one transmission input shaft, the ramp system having:
an input ramp (30) for introducing an actuating torque, an output ramp (40) which can be rotated relative to the input ramp (30) in order to open or close the friction clutch (12), and
a restoring spring (48) which is configured as a leaf spring and is connected to the input ramp (30) and the output ramp (40) in order to rotate the output ramp (40) relative to the input ramp (30) into a defined starting position,
it being possible for at least part of the torque which is transmitted to the output ramp (40) to be transmitted via the restoring spring (48),
the restoring spring (48) running substantially in the tangential direction between a torque introduction point of the input ramp (30) and a torque output point of the output ramp (40), and running obliquely at an attack angle with respect to a radial plane of the ramp system (14), and
the restoring spring (48) permitting an increase in the actuating force at the output ramp (40) in the case of an increase in an axial extent of the ramp system (14), **characterized in that**
the input ramp (30) has a bearing part (32) for supporting the ramp system (14) on a bearing, and
the restoring spring (48) is connected to the bearing part (32) in order to configure the torque introduction point.

2. Ramp system according to Claim 1, **characterized in that**, during the transmission of torque, the restoring spring (48) provides a transmission of force in the axial direction which changes in the case of an increase in the axial extent of the ramp system (14), by way of the tangential course of the restoring spring (48),
and,
in the axial direction into the starting position, the transmission of force substantially compensates for a change in a restoring force of the restoring spring (48) which changes in the case of an increase in the axial extent of the ramp system (14).

3. Ramp system according to Claim 1 or 2, **characterized in that** an extent of the restoring spring (48) in the circumferential direction and/or the attack angle of the restoring spring (48) and/or a spring stiffness of the restoring spring (48) and/or an axial spacing between the torque introduction point and the torque output point and/or a coefficient of friction of a pressing face (42) of the output ramp (40), which pressing face (42) points away from the input ramp (30), are/is selected in order to compensate for an increasing restoring force of the restoring spring (48) in the case of an increasing extent of the ramp system (14).

4. Ramp system according to one of Claims 1 to 3, **characterized in that** the input ramp (30) is spaced apart from the output ramp (40) via at least one bearing element (38), in particular a ball.

5. Ramp system according to Claim 1, **characterized in that** the bearing part (32) is a planetary carrier (36) of a planetary transmission (24) for transmitting an actuating torque to the input ramp (30).

6. Friction clutch, in particular wet or dry multiple disc clutch, for coupling a drive shaft (16) of a motor vehicle engine to at least one transmission input shaft, the friction clutch having:
an input part (14), in particular an input disc carrier, which can be coupled to the drive shaft (16) in order to introduce a torque,
an output part (18), in particular an output disc carrier, which can be coupled to the transmission input shaft in order to output a torque, it being possible for the input part (44) to be pressed with the output part (18) via at least one friction lining (46) which is subject to wear, and
a ramp system (14) according to one of Claims 1 to 5 for pressing the output part (18) with the input part (44) in a frictionally locking manner by way of a change in an axial extent of the ramp system (14).

7. Friction clutch according to Claim 6, **characterized in that** the restoring force of the restoring spring (48) is substantially constant between the closed position of the friction clutch (12) in the case of an unworn friction lining (46) and the closed position of the friction clutch (12) in the case of a worn friction lining (46).

8. Friction clutch according to Claim 6 or 7, **characterized in that** the restoring spring (48) provides a nominal restoring force in the case of an unworn friction lining (46) in the closed position of the friction clutch (12), and the restoring spring (48) provides a transmission of force in the axial direction which changes in the case of a wear-induced increase in the axial extent of the ramp system (14) as the result of wear of the friction lining (46), in the case of the transmission of torque by way of the tangential course of the restoring spring (48), and
the transmission of force substantially compensates for a change in a nominal restoring force which changes in the case of a wear-induced increase in the axial extent of the ramp system (14).

## Revendications

1. Système de rampe permettant l'actionnement d'un embrayage à friction (12), en particulier d'un embrayage à disques humide ou sec, pour l'accouplement d'un arbre d'entraînement (16) d'un moteur de véhicule automobile à au moins un arbre d'entrée de boîte de vitesses, le système de rampe présentant :
une rampe d'entrée (30) pour l'introduction d'un couple d'actionnement,
une rampe de sortie (40) pouvant tourner par rapport à la rampe d'entrée (30) pour ouvrir ou fermer l'embrayage à friction (12) et
un ressort de rappel (48) configuré sous forme de ressort à lames et connecté à la rampe d'entrée (30) et à la rampe de sortie (40) pour faire tourner la rampe de sortie (40) par rapport à la rampe d'entrée (30) dans une position de sortie définie,
au moins une partie du couple transmis à la rampe de sortie (40) pouvant être transmise par le biais du ressort de rappel (48),
le ressort de rappel (48) s'étendant essentiellement dans la direction tangentielle entre un endroit d'introduction de couple de la rampe d'entrée (30) et un endroit de sortie de couple de la rampe de sortie (40) et s'étendant obliquement suivant un angle d'inclinaison par rapport à un plan radial du système de rampe (14), et
le ressort de rappel (48), en cas d'augmentation d'une étendue axiale du système de rampe (14), autorisant une augmentation de la force d'actionnement au niveau de la rampe de sortie (40),
**caractérisé en ce que**
la rampe d'entrée (30) présente une partie de palier (32) pour l'appui du système de rampe (14) sur un palier (34), et
le ressort de rappel (48) est connecté à la partie de palier (32) pour former l'endroit d'introduction de couple.

2. Système de rampe selon la revendication 1, **caractérisé en ce que**
le ressort de rappel (48), lors du transfert de couple par l'allure tangentielle du ressort de rappel (48), fournit un transfert de force dans la direction axiale variant en cas d'augmentation de l'étendue axiale du système de rampe (14), et
le transfert de force compense essentiellement une variation d'une force de rappel du ressort de rappel (48), variant en cas d'augmentation de l'étendue axiale du système de rampe (14), dans la direction axiale dans la position de sortie.

3. Système de rampe selon la revendication 1 ou 2, **caractérisé en ce qu'**une étendue du ressort de rappel (48) dans la direction périphérique et/ou l'angle d'inclinaison du ressort de rappel (48) et/ou une raideur de ressort du ressort de rappel (48) et/ou une distance axiale entre l'endroit d'introduction de couple et l'endroit de sortie de couple et/ou un coefficient de friction d'une surface de pressage (42) de la rampe de sortie (40), tournée à l'écart de la rampe d'entrée (30), sont choisis pour compenser une force de rappel croissante du ressort de rappel (48) dans le cas d'une étendue croissante du système de rampe (14).

4. Système de rampe selon l'une quelconque des revendications 1 à 3, **caractérisé en ce que** la rampe d'entrée (30) est espacée de la rampe de sortie (40) par le biais d'au moins un élément de palier (38), en particulier d'une bille.

5. Système de rampe selon la revendication 1, **caractérisé en ce que** la partie de palier (32) est un support planétaire (36) d'un engrenage planétaire (24) pour transférer un couple d'actionnement à la rampe d'entrée (30).

6. Embrayage à friction, en particulier embrayage à disques humide ou sec, pour l'accouplement d'un arbre d'entraînement (16) d'un moteur de véhicule automobile à au moins un arbre d'entrée de boîte de vitesses, l'embrayage à friction présentant :
une partie d'entrée (44) pouvant être accouplée à l'arbre d'entraînement (16), en particulier un support de disques d'entrée pour introduire un couple,
une partie de sortie (18) pouvant être accouplée à l'arbre d'entrée de boîte de vitesses, en particulier un support de disques de sortie pour la sortie d'un couple, la partie d'entrée (44) pouvant être pressée avec la partie de sortie (18) par le biais d'au moins une garniture de friction (46) soumise à usure, et
un système de rampe (14) selon l'une quelconque des revendications 1 à 5 pour presser par engagement par friction la partie de sortie (18) avec la partie d'entrée (44) en faisant varier une étendue axiale du système de rampe (14).

7. Embrayage à friction selon la revendication 6, **caractérisé en ce que** la force de rappel du ressort de rappel (48) entre la position fermée de l'embrayage à friction (12) lorsque la garniture de friction (46) n'est pas usée et la position fermée de l'embrayage à friction (12) lorsque la garniture de friction (46) est usée est essentiellement constante.

8. Embrayage à friction selon la revendication 6 ou 7, **caractérisé en ce que** le ressort de rappel (48), lorsque la garniture de friction (46) n'est pas usée, dans la position fermée de l'embrayage à friction (12), fournit une force de rappel nominale et le ressort de rappel (48) lors du transfert de couple par l'allure tangentielle du ressort de rappel (48), fournit un transfert de force dans la direction axiale variant dans le cas d'une augmentation, due à l'usure, de l'étendue axiale du système de rampe (14) par une usure de la garniture de friction (46) et
le transfert de force compense essentiellement une variation d'une force de rappel nominale variant dans le cas d'une augmentation due à l'usure de l'étendue axiale du système de rampe (14).
